# DEMANDE DE BREVET EUROPEEN

(11) **EP 0 605 317 A1**
(43) Date de publication de la demande: **06.07.1994**
(21) Numéro de dépôt: 93403183.2
(22) Date de dépôt: 27.12.1993
(51) Int. Cl.: G01N 21/88

(54) **Procédé et dispositif optiques de classification automatique de pastilles cylindriques de combustible nucléaire**

(30) Priorité: 29.12.1992 FR 9215847
(71) Demandeur: SOCIETE FRANCO-BELGE DE FABRICATION DE COMBUSTIBLES FBFC, F-92084 Paris La Défense (FR)
(72) Inventeur: Bernardin, Michel, F-38640 Claix (FR); Bouvet, Paul, F-38470 Vinay (FR); Wache, Claude, F-26100 Romans (FR)
(74) Mandataire: Fort, Jacques

(57) **Abrégé**

Pour classifier automatiquement des pastilles cylindriques de combustible nucléaire, on les fait tourner, autour de leur axe. On focalise, sur une génératrice nominale de la pastille, un faisceau plat. On recueille la lumière restituée provenant d'une zone allongée, qui est celle illuminée sur une pastille sans défaut. On détecte l'intensité point par point le long de la zone et on déduit les défauts des variations de l'intensité. Pour cela on détermine les points de chaque zone où l'intensité de la lumière restituée est comprise entre deux seuils de normalité ajustables ; on mémorise les points de transition ; et on détermine les limites de chaque défaut et sa nature par analyse de connexité.

## Description

La présente invention concerne l'inspection des pastilles cylindriques de combustible nucléaire (à base d'oxyde d'uranium en général) utilisées dans les crayons de combustible pour réacteur nucléaire, en vue de déceler les défauts de surface et d'affecter les pastilles à des classes différentes suivant la nature et l'importance des défauts qu'elles présentent.

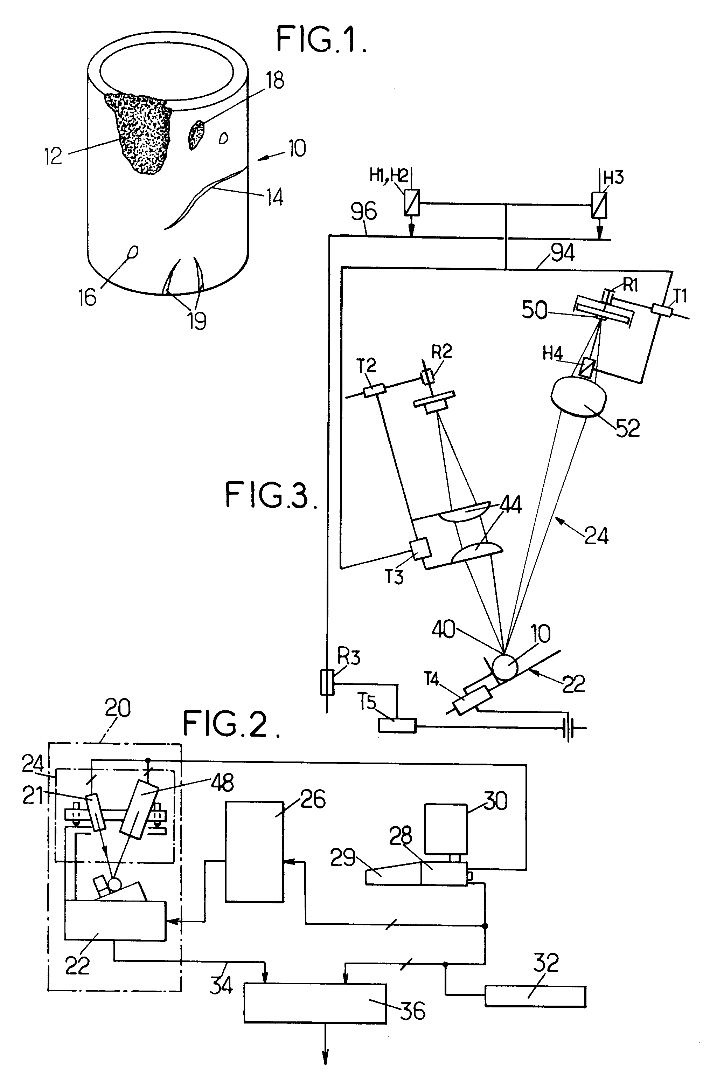

La figure 1 montre schématiquement une pastille de combustible nucléaire du genre utilisé notamment dans les crayons de combustible des réacteurs à eau sous pression, constituée par du dioxyde d'uranium fritté, pouvant contenir des éléments supplémentaires et notamment, en cas de réutilisation de combustible déjà irradié, une faible teneur de produits de fission et/ou de l'oxyde de plutonium. L'invention peut s'appliquer également à des pastilles de poison consommable comme celles d'oxyde de gadolinium.

Une pastille parfaite 10 se présente sous forme d'un cylindre dont la périphérie est rectifiée et dont les faces terminales présentent un évidement central concave, et éventuellement un chanfrein. L'allure générale de défauts susceptibles d'être rencontrés sur la face latérale est schématisée sur la figure 1.

Un éclat 12 peut être provoqué par un choc lors de la manutention ; il se traduit par une surface en retrait de la surface théorique.

Une fissure 14 constitue une zone de largeur très inférieure à sa longueur, dont le fond est en retrait de la surface théorique. L'association de plusieurs fissures peut constituer un défaut en onglet 19.

Une piqûre 16 constitue une irrégularité de surface caractérisée par la présence d'une particule rectifiée et enchassée dans la matrice. Cette particule est de même nature chimique que la pastille.

Les défauts ci-dessus sont considérés comme des défauts de relief. On connaît d'autres types de défaut comme par exemple les tâches, les défauts de rectification, et les inclusions métalliques. Une tâche est due à une souillure de la pastille, liée au procédé de fabrication. Un défaut de rectification est une partie plus brillante de la pastille due à une absence de rectification sur une partie de la surface latérale. Une inclusion métallique est une partie, en général très claire, de la pastille provoquée par l'incrustation d'un corps étranger dans la pastille. Celui-ci apparaît en surface, il est rectifié et ne constitue pas un défaut de relief. Tous ces défauts décrits ici sont caractérisés par des formes ou des teintes différentes.

On a déjà proposé divers procédés optiques de classification automatique de pastilles. En particulier, le document FR-A-2 461 944 fait connaître un procédé suivant lequel :
- on fait tourner, autour de son axe, chaque pastille à classifier,
- on focalise, sur une génératrice nominale de la pastille, un faisceau plat provenant d'une source de lumière,
- on recueille la lumière restituée provenant d'une zone allongée, qui est celle illuminée sur une pastille sans défaut et dont le diamètre est nominal,
- on détecte son intensité point par point le long de la zone allongée,
- et on déduit les défauts des variations de ladite intensité.

Plus précisément, les défauts sont déduits d'une comparaison entre le signal d'intensité quantifiée et une valeur moyenne.

Ce procédé ne permet pas une évaluation précise de l'importance des défauts et conduit à rejeter ou à retenir les pastilles suivant des critères relativement grossiers. De plus il faut former deux images : la première permet de détecter des défauts tels que : écaillage, partie non meulée, inclusion métallique ; la deuxième permet de détecter des défauts tels que fissure, piqûre.

La présente invention vise à fournir un procédé permettant une meilleure évaluation de la nature et de la gravité des défauts et en conséquence une classification plus fine, en n'exigeant qu'une seule image pour reconnaître à la fois les défauts de relief et les défauts de surface.

Dans ce but l'invention propose notamment un procédé du genre ci-dessus défini suivant lequel :
- on détermine les points de chaque zone où l'intensité de la lumière restituée est comprise entre un seuil supérieur de normalité et un seuil inférieur de normalité ajustables,
- on mémorise les points de transition entre région de normalité et région de non-normalité et, sous forme numérique, l'intensité pour les points de la région de non-normalité,
- on détermine les limites de chaque défaut par analyse de connexité et on détermine la nature du défaut parmi des natures prédéterminées identifiées par des critères géométriques et des critères d'intensité lumineuse, et
- on classifie les pastilles en au moins une classe de pastilles correctes et une classe de pastilles rebutées.

Les exigences de qualité portant sur les pastilles peuvent être différentes suivant l'emplacement où les pastilles seront placées dans un coeur de réacteur nucléaire. Dans les zones où le flux neutronique est le plus élevé, seuls des défauts minimes peuvent être tolérés. Dans d'autres zones du réacteur, les exigences peuvent être moins strictes. Suivant un mode particulièrement avantageux de réalisation de l'invention, l'étape de classification des pastilles s'effectue par association dans trois classes : La première correspond à l'absence de défaut ou à la présence de défauts acceptables sans restriction d'utilisation, la seconde correspond à la présence de défauts acceptables dans certaines parties du coeur du réacteur. La troisième correspond à la présence de défauts rédhibitoires par leur importance ou leur nombre.

L'opération de double seuillage mentionnée plus haut permet de localiser les points ne répondant pas à la normalité ; elle ne suffit pas à identifier les défauts, ni même la catégorie à laquelle ils appartiennent, défauts de relief ou défauts d'état de surface. Cette différenciation peut notamment être effectuée par de nouvelles opérations de seuillage, à des niveaux de seuil écartés de la zone de normalité. Par exemple un défaut de relief se traduira par une intensité très faible de la lumière recueillie, inférieure à un seuil extrême-bas. Une inclusion métallique très réfléchissante au niveau de la surface nominale se traduira au contraire par une intensité supérieure à un seuil extrême haut.

Ces secondes opérations de seuillage sont avantageusement effectuées par voie logicielle, sur les valeurs d'intensité numérisées, bien qu'elles puissent également être réalisées sur un signal analogique.

L'invention propose également un dispositif optique d'inspection automatique de pastilles cylindriques de combustible nucléaire, comprenant : une source lumineuse pour focaliser un faisceau sous forme d'une raie suivant une génératrice d'une pastille à inspecter ; des moyens pour faire tourner la pastille sur elle-même autour de son axe ; un capteur de lumière sur lequel est formée l'image de la génératrice éclairée de la pastille par un dispositif de lentilles et de diaphragme, la rotation de la pastille permettant d'analyser toutes les génératrices de la pastille, le dispositif étant caractérisé en ce que le capteur attaque un processeur de signal ayant :
- un ensemble de prétraitement pour déterminer ceux des signaux de sortie des détecteurs constitutifs du capteur, qui sont hors d'une région de normalité définie par un seuil supérieur et un seuil inférieur ajustables, pour numériser lesdits signaux et pour repérer les transitions avec la région de normalité,
- un circuit de traitement permettant de recomposer ligne par ligne les défauts par comparaison entre chaque ligne et la suivante et identification des défauts par leur forme et leur niveau de teinte ou niveau de gris,
- et des moyens pour mémoriser l'ensemble des défauts au fur et à mesure de l'exploration de la pastille et classifier la pastille en fonction de critères prédéterminés.

De façon à autoriser une cadence de classification élevée, le dispositif est avantageusement prévu pour traiter plusieurs pastilles à la fois. En particulier le dispositif peut être prévu pour classifier simultanément n x m pastilles, n et m étant des nombres entiers supérieurs à 1. Les n x m pastilles sont entraînés en rotation simultanément et en synchronisme par un même mécanisme et n capteurs sont prévus, ayant chacun m x p détecteurs. Un circuit de prétraitement affecté à m pastilles effectue alors la comparaison avec les seuils de normalité pour les signaux fournis par les m x p détecteurs et répartit ensuite les informations recueillies entre n x m circuits de traitement.

Les sources peuvent être en nombre égal à celui des pastilles à classifier simultanément et être constituées par des diodes laser. L'astigmatisme du faisceau de sortie de ces diodes permet de constituer un faisceau plat fortement focalisé sur une ligne à l'aide d'une optique constituée de lentilles cylindriques. Chaque capteur peut être constitué par une caméra ayant une barrette de détecteurs CCD, à intégration de charges pendant des durées réglables. Le détecteur peut également fonctionner simultanément en accumulation de charge pour la ligne q de l'image et en transfert pour la ligne q-1. Ceci permet de gagner en cadences. Les seuils de normalité et les seuils extrêmes peuvent être ajustés à partir de mesures effectuées sur une pièce étalon.

L'invention sera mieux comprise à la lecture de la description qui suit d'un mode particulier de réalisation, donné à titre d'exemple non limitatif. La description se réfère aux dessins qui l'accompagnent :
- la figure 1, déjà mentionnée, montre, en perspective, une pastille comportant des défauts de surface ;
- la figure 2 est un schéma de principe montrant les composants principaux d'un dispositif suivant un mode particulier de réalisation de l'invention ;
- la figure 3 montre schématiquement la disposition relative d'une pastille en cours d'examen, de la source et du capteur dans un dispositif du genre montré en figure 2, ainsi qu'une répartition possible de moyens de réglage ;
- la figure 4 montre, depuis le dessus de la figure 3, une disposition possible de sources et de capteurs permettant la classification simultanée de plusieurs pastilles ;
- la figure 5 montre schématiquement, à grande échelle, une zone illuminée de pastille et l'effet d'un défaut indiqué en tirets ;
- la figure 6 est un diagramme linéaire montrant une variation possible du signal lors de l'intégration sur une génératrice présentant différents défauts ; et
- la figure 7 est un synoptique de principe d'un processeur utilisable dans un dispositif du genre montré en figure 2.

Le dispositif dont la constitution de principe est montrée en figure 2 peut être regardé comme constitué d'un certain nombre de composants entre lesquels les différentes fonctions à remplir sont réparties. La répartition qui sera donnée n'est nullement exclusive, non plus que les matériels qui seront donnés à titre d'exemple.

Le dispositif représenté comprend un appareil de saisie d'informations 20 ayant des moyens 22 de réception des pastilles et de mise en rotation de ces pastilles et un bloc de contrôle optique 24. Les moyens 22 de réception des pastilles et de mise en rotation peuvent être commandés par un automate programmable 26. Ces moyens 22 peuvent avoir la constitution décrite dans la demande de brevet intitulée "Dispositif de tri automatique de pastilles", déposée le même jour que la présente demande et au nom du même titulaire. L'automate 26 peut alors être prévu pour commander le chargement des pastilles sur les moyens de réception 22, la mise en rotation des pastilles, le déchargement des pastilles et leur orientation vers des réceptacles différents suivant le classement.

Le fonctionnement de l'ensemble du dispositif peut être commandé par un calculateur 28 muni d'un clavier 29 d'entrée de données, d'un écran de visualisation 30 et d'une imprimante 32 d'impression des résultats de la classification. Le bloc de contrôle optique 24 transmet par une liaison 34 les informations à des cartes de prétraitement installées dans une armoire 36. Les informations prétraitées sont transmises au calculateur 28. Une autre répartition des fonctions serait cependant possible.

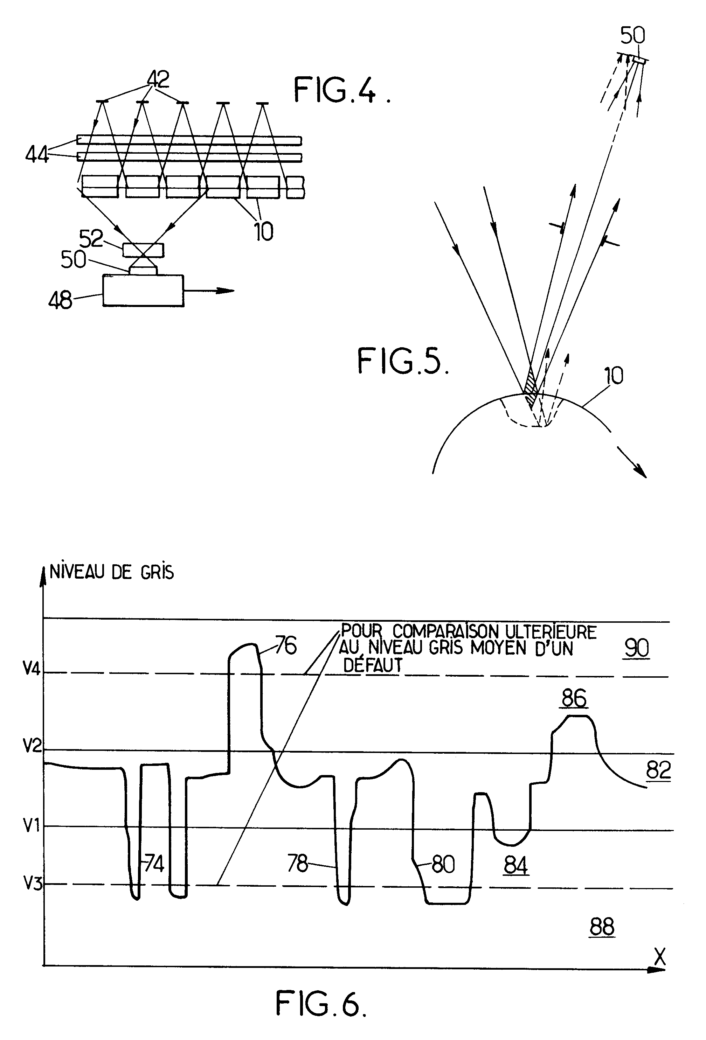

Le bloc de contrôle optique 24 peut avoir la constitution de principe montrée en figures 3 et 4 lorsque le dispositif est destiné à classifier simultanément m x n = 4 x 3 = douze pastilles 10. Il comprend un ensemble d'éclairage et un ensemble de prise d'images.

L'ensemble d'éclairage est destiné à illuminer l'ensemble des douze pastilles suivant une raie linéaire 40 de très faible largeur, typiquement 50 µm environ. Pour cela les moyens d'éclairage peuvent comporter douze diodes laser 42 alignées. L'astigmatisme du faisceau émis par une diode laser est suffisamment important pour recouvrir la totalité de la longueur d'une pastille, comme le montre la figure 4. Une optique afocale constituée de lentilles cylindriques 44 focalise le faisceau sous forme d'une raie étroite correspondant exactement à une génératrice sur la surface d'une pastille 10 de diamètre nominal et ne présentant pas de défaut de surface, comme le montre la figure 5.

Les moyens de prise d'images, appelés capteurs, comportent, dans le cas illustré, au moins une caméra 48 de type linéaire, généralement à barrette CCD 50 pouvant avoir une seule rangée de détecteurs ou plusieurs rangées, avec transfert d'une ligne à l'autre en synchronisme avec le mouvement de rotation de la pastille. Dans tous les cas une réduction du bruit est avantageusement obtenue par accumulation de charges. L'optique 52 de la caméra est prévue pour que se forme sur la barrette 50 l'image de la raie éclairée par la source 42 sur une pastille de diamètre nominal et sans défaut de relief. Dans le cas ci-dessus d'un dispositif de classification simultanée de douze pastilles, quatre caméras alignées comportant chacune une barrette de 1 728 détecteurs sont par exemple prévues. Chaque détecteur de la caméra observe alors un carré de 50 µm de côté.

La figure 5 montre que chaque détecteur 50 ne reçoit que la lumière réfléchie ou diffusée dans une zone d'intersection, indiquée en hachure. Cette zone est en forme de losange, dont l'allongement dépend des angles d'incidence et d'observation choisis. Avec une incidence s'écartant de la normale, un défaut de relief sur une pastille de diamètre nominal, tel que le défaut indiqué en tirets, réduit la lumière reçue par le capteur et peut même l'annuler.

Le bloc de contrôle optique 24 est muni de moyens permettant de régler ses caractéristiques propres et, dans la plupart des cas, des moyens permettant de régler sa position par rapport au dispositif qui porte les moyens 22 de réception des pastilles et de mise en rotation de ces pastilles.

Dans le mode de réalisation montré en figure 3, les moyens de réglages mécaniques propres du bloc de contrôle optique sont constitués par des jeux vis-écrous, munis de moyens permettant de les bloquer.

Ces moyens comportent, pour les capteurs, des moyens T1 de réglage en position par rapport à un socle 94 permettant de sélectionner l'angle d'observation des génératrices d'une pastille 10 et des moyens R1 de réglage de l'orientation du capteur. Le réglage de mise au point s'effectue à l'aide de moyens H4, permettant de déplacer l'optique 52 le long de l'axe optique. Les moyens R1, T1, H4 permettent donc de régler les moyens de prise d'image appelés capteurs sur le gabarit.

Les moyens de réglage de l'ensemble d'éclairage 21 comportent des moyens T2, R2 et T3 remplissant un rôle similaire à celui des moyens T1l, R1 et H4. Ils permettent d'effectuer la mise au point de l'éclairage sur le gabarit. Le jeu vis-écrou T3 permet d'effectuer la mise au point de l'éclairage de la génératrice observée.

Les moyens H1, H2, H3, R3, T5 permettent de régler le bloc de contrôle optique, préalablement étalonné, par rapport aux moyens 22 de réception et de mise en rotation des pastilles ; en particulier le réglage d'assiette et de hauteur du bloc de contrôle optique 24, sur le châssis 96 de l'appareil, peut être constitué par un jeu de trois vis micrométriques H1, H2 et H3 disposées aux sommets d'un triangle.

Les moyens 22 comportent en général eux-aussi des moyens de réglage. Dans le cas illustré sur la figure 3, ils comportent des moyens de réglage en rotation R3, permettant de régler l'orientation du capteur par rapport aux pastilles et des moyens de réglage en translation T5, permettant de faire coïncider la ligne observée et éclairée par le bloc de contrôle optique 24 avec une génératrice réelle. L'organe T4 permet de régler mécaniquement le dispositif par construction.

Le réglage mécanique du bloc de contrôle optique s'effectue en atelier, avant mise en place sur l'appareil, en remplaçant les pastilles 10 par un gabarit ou étalon portant une ligne de référence en relief et une ligne supplémentaire qui lui est parallèle. Pour régler le bloc de contrôle optique, on le dispose sur l'étalon, de telle sorte qu'il éclaire la ligne en relief. La position des diodes est réglée à l'aide des vis de réglage, associées à une platine de rotation-translation. On peut dans certains cas (premier réglage par exemple) utiliser un macroscope pour affiner le positionnement des diodes.

Après le réglage des diodes, le bloc de contrôle optique est retourné sur l'étalon ; les diodes éclairent alors la seconde ligne. Les caméras sont mises sous tension. Le signal qu'elles reçoivent est affiché sur un moniteur de commande du bloc de contrôle optique. Le positionnement géométrique des caméras est obtenu en recherchant le maximum du signal lumineux. Ceci est obtenu en utilisant les réglages de la platine de rotation pour aligner parfaitement la barrette CCD du capteur et la zone éclairée par les diodes. Les réglages T1-R1 de la platine de translation sont utilisés pour centrer la barrette sur la dite zone. Ensuite l'objectif de la caméra est réglé pour focaliser le capteur sur la seconde ligne qui représente la génératrice des pastilles à observer.

La caméra 48 (ou chaque caméra) attaque un ensemble de pré-traitement ayant des fonctions d'acquisition des informations provenant ligne par ligne des caméras, de prétraitement analogique de ces informations avec sélection des zones de défaut potentiel, et d'organisation des informations pastille par pastille dans le cas où la caméra reçoit des signaux provenant de plusieurs pastilles.

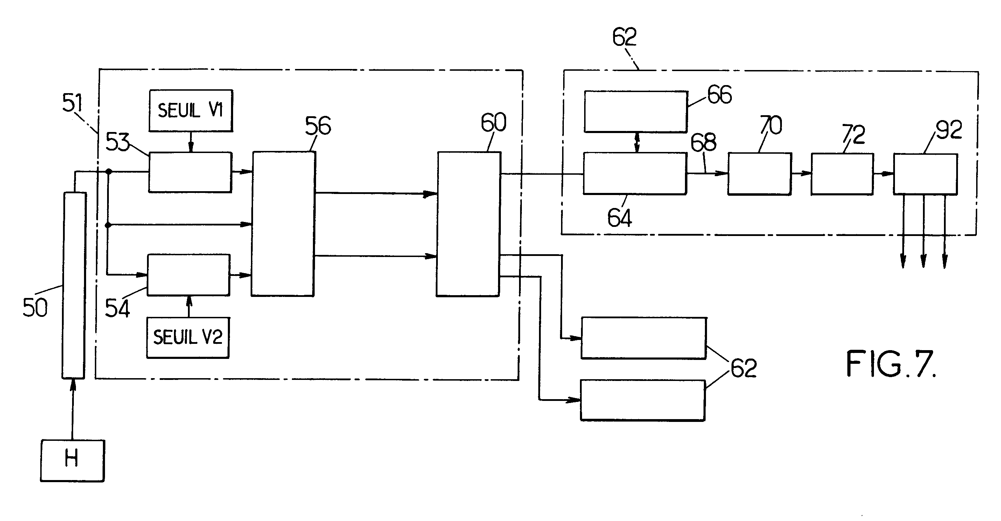

L'ensemble de traitement 51 schématisé en figure 7 comprend deux comparateurs 53 et 54 et un circuit de sélection 56 permettant de séparer les signaux situés dans une région de normalité comprise entre deux niveaux de seuil V1 et V2 (figure 6) de ceux situés en-dehors de la région de normalité. Le seuillage aux niveaux V1 et V2 est avantageusement mis en oeuvre, ligne de balayage par ligne de balayage, dès le début de l'acquisition de l'image d'une pastille. Le circuit de sélection 56 peut d'une part identifier les points de normalité par un code et d'autre part orienter les points de non-normalité. Les informations numériques ainsi obtenues sont groupées pastille par pastille par un circuit de sortie 60 et orientées, dans le cas représenté, vers trois circuits identiques 62 de traitement dont un seul sera décrit, pouvant être groupé en un seul circuit intégré. Ce traitement peut s'effectuer en mémorisant les transitions entre région de normalité et région de non-normalité, rendant inutile la mémorisation de tous les points de normalité. Cette mémorisation peut être effectuée dans une mémoire incorporée au circuit de sortie 60.

La stratégie de fonctionnement de chaque circuit de traitement, en vue de la reconnaissance des défauts et de leur importance, peut notamment être la suivante :
- repérage de chaque défaut, de sa forme et de sa surface par analyse de connexité, avec reconstitution dynamique ligne par ligne,
- analyse de la forme du défaut (surface, élongation, rondeur, ...) en vue de son classement,
- en fonction de son niveau de gris moyen et des informations précédentes, le défaut est identifié,
- classification de chaque défaut,
- classification de la pastille suivant la nature, l'importance et la position, des défauts qu'elle présente.

En particulier l'équipement traite certains cas de position relative critique de défauts qui pris individuellement sont acceptables. Ainsi, le dispositif selon l'invention permet de détecter les défauts en onglet 19 susceptibles de provoquer un éclat tel que 12, par propagation des fissures, lorsque la pastille est chargée dans le crayon.

Le circuit de traitement 62 montré en figure 7 comprend un premier processeur 64 associé à une mémoire vive de travail ayant une capacité au moins égale à celle de deux lignes de balayage. Ce processeur compare chaque ligne d'ordre n à la ligne précédente d'ordre n-1 afin de déterminer si un défaut existant sur la ligne n-1 existe encore sur la ligne n : il peut ainsi fournir, sur sa sortie 68, des indications portant sur la géométrie du défaut et le niveau de gris moyen du défaut à une mémoire tampon 70. Le contenu de cette mémoire tampon est traité par un second processeur 72 dès que le premier processeur 64 envoie un signal indiquant qu'un défaut est complètement représenté dans la mémoire 70. Comme on peut avoir plusieurs défauts distincts sur la même ligne de balayage, le processeur 64 est prévu pour pouvoir traiter plusieurs défauts à la fois.

Le processeur 72 a notamment pour rôle d'identifier la nature du défaut par un nouveau seuillage, appliqué au niveau de gris moyen de ce défaut sur toute l'étendue de ce défaut, à l'issue de la formation complète de l'image. Ce seuillage est effectué à des niveaux numériques correspondant à des seuils V3 et V4 (figure 6), situés de part et d'autre de la région de normalité. Les seuils V1, V2, V3 et V4 sont avantageusement ajustables, par exemple au cours d'un calibrage préalable effectué en utilisant soit une pastille étalon déclarée saine ou présentant des défauts calibrés en nature et en importance, soit un simple barreau.

La figure 6 montre une évolution du signal que l'on peut considérer comme représentative dans le cas de balayage d'une ligne avec présence successive, sur la longueur L de la pastille, d'une piqûre 74, d'une inclusion ou d'un défaut de rectification 76, d'une fissure 78 et d'un éclat 80. La zone 82 correspond au niveau normal de gris. Les régions 84 et 86 correspondent à des tâches sombre et claire. La région 88 correspond à des défauts de relief. La zone 90 correspond à des défauts de rectification ou à des inclusions.

Le processeur 72 permet ainsi de différencier les défauts de surface des défauts de relief, par l'opération de seuillage. Il comporte de plus une intelligence artificielle mémorisée, sous forme d'un programme et d'une liste de paramètres, permettant d'identifier la nature des défauts de relief suivant leur forme et leur étendue. On connaît déjà de nombreux systèmes d'intelligence artificielle permettant d'effectuer un tri entre des défauts en fonction de caractéristiques géométriques et de réflectivité de ces défauts : on pourra se reporter notamment à la demande de brevet déjà mentionnée dans l'introduction de la présente demande et à l'article "Automatic classification of defects in semi-conductor devices", Dralla et autres, dans SPIE Vol. 1261, Integrated Circuit Metrology Inspection and Process Control IV (1990), pages 173 et suivantes. Le système d'intelligence artificielle mémorisé peut être prévu pour classer chaque défaut relevé en trois classes A (défauts suffisamment minimes pour être acceptables dans tous les cas), B (défauts acceptables pour des régions peu sollicitées du réacteur), R (défaut inacceptable à lui seul).

Ces informations sont transmises par un dernier processeur 92 qui accumule toutes les informations relatives à chaque pastille à son tour et permet de trier ces pastilles. Les pastilles peuvent être notamment réparties en trois classes :
- pastilles acceptées parce que ne présentant aucun défaut ou présentant uniquement un défaut de type A ou au plus quelques défauts de type A sans associations pénalisantes ;
- pastilles utilisables en milieu peu sollicité parce que présentant au plus quelques défauts de type A ou B sans associations pénalisantes ;
- pastilles rebutées parce que comportant un ou plusieurs défauts de type R ou un nombre excessif de défauts de type A ou B, ou des associations critiques de défauts de type A ou B.

On voit que le procédé permet de rebuter une pastille dès qu'un défaut de classe R apparaît et d'arrêter le traitement pour cette pastille dès cet instant, ce qui épargne du temps de calcul. Non seulement les défauts sont identifiés, mais leurs caractéristiques sont déterminées et accumulées, de sorte que l'on peut tenir compte non seulement de la gravité de chaque défaut, mais aussi d'autres éléments, comme la position relative de plusieurs défauts qui peut conduire à un rejet de la pastille ou une affectation à la classe B, bien que les défauts individuels soient mineurs.

Il est possible d'adopter une succession d'étapes différente de celle donnée à titre d'exemple particulier ci-dessus. Cependant, en règle générale, il y aura successivement :
- identification des défauts par analyse de connexité, c'est-à-dire traitement de morphologie sur des voisinages, et analyse des niveaux de gris ;
- classement des défauts individuels, avec rejet dès qu'apparaît un défaut rédhibitoire à lui-seul ;
- classement de la pastille.

A titre d'exemple, on peut indiquer qu'un dispositif a été réalisé pour traiter douze pastilles à la fois. Le bloc de contrôle optique incorpore 12 diodes laser et fournit un trait lumineux de 300 millimètres de longueur et de 50 µm de largeur. Les diodes laser présentent l'avantage d'une consommation électrique faible (4 Watts pour fournir une puissance lumineuse de 36 milliwatts). Le mécanisme d'entraînement en rotation permet de faire tourner chaque pastille sur elle-même d'un tour en moins d'une seconde. Chaque caméra est prévue pour enregistrer l'énergie lumineuse sur chaque détecteur par pas successifs de 50 µm, chaque capteur ayant un champ transversal de 50 µm. Ainsi tout défaut de surface au moins égal à 100x100 µm² est détectable avec une probabilité de 80%. Le traitement des informations permet de fournir une mesure correcte des dimensions d'un défaut à partir d'une surface de 250x250 µm².

L'invention propose également une constitution qui permet un réglage commode et précis de la focalisation sur les pastilles et du champ des caméras.

Un autre avantage du dispositif est de permettre notamment de répertorier les défauts par catégorie et de permettre, si des dérives importantes se produisent sur un type de défaut, d'intervenir rapidement en amont de la fabrication pour y remédier.

## Revendications

1. Procédé de classification automatique de pastilles cylindriques de combustible nucléaire, suivant lequel :
- on fait tourner, autour de son axe, chaque pastille (10) à classifier,
- on focalise, sur une génératrice nominale de la pastille, un faisceau plat provenant d'une source de lumière,
- on recueille la lumière restituée provenant d'une zone allongée, qui est celle illuminée sur une pastille sans défaut et dont le diamètre est nominal,
- on détecte son intensité point par point le long de la zone allongée,
- et on déduit les défauts des variations de ladite intensité,
caractérisé en ce que,
- on détermine les points de chaque zone où l'intensité de la lumière restituée est comprise entre un seuil supérieur de normalité (V2) et un seuil inférieur de normalité (V1) ajustables,
- on mémorise les points de transition entre région de normalité et région de non-normalité et, sous forme numérique, l'intensité pour tous les points de la région de non-normalité, et pour eux seuls,
- on détermine les limites de chaque défaut par analyse de connexité et on détermine la nature du défaut parmi des natures prédéterminées identifiées par des critères géométriques et des critères d'intensité lumineuse moyenne dudit défaut et
- on classifie les pastilles en au moins une classe de pastilles correctes et une classe de pastilles rebutées.

2. Procédé selon la revendication 1, caractérisé en ce que l'on mémorise successivement tous les points de non-normalité et que l'on effectue un seuillage de discrimination de nature, à deux niveaux de seuil (V3,V4) écartés de la zone de normalité (V1-V2), sur le niveau de gris moyen de chaque défaut révélé.

3. Procédé selon la revendication 2, caractérisé en ce que le nouveau seuillage est effectué par voie logicielle, après numérisation de l'intensité.

4. Procédé selon l'une quelconque des revendications précédentes, caractérisé en ce que la nature et l'importance des défauts est déterminée par intelligence artificielle à partir d'une reconstitution dynamique de l'étendue des défauts.

5. Dispositif optique d'inspection automatique de pastilles cylindriques de combustible nucléaire, comprenant : une source lumineuse(42) pour focaliser un faisceau sous forme d'une raie suivant une génératrice d'une pastille (10) à inspecter ; des moyens (22) pour recevoir une pastille au moins et la faire tourner sur elle-même autour de son axe ; un capteur (50) de lumière sur lequel est formée l'image de la génératrice éclairée de la pastille par un dispositif de lentilles et de diaphragme, la rotation de la pastille permettant d'analyser toutes les génératrices de la pastille, caractérisé en ce que le capteur attaque un processeur de signal ayant :
- un ensemble de prétraitement pour déterminer ceux des signaux de sortie des détecteurs constitutifs du capteur, qui sont hors d'une région de normalité définie par un seuil supérieur (V2) et un seuil inférieur (V1) ajustables, et pour repérer les transitions avec la région de normalité,
- un circuit de traitement permettant de recomposer ligne par ligne les défauts par comparaison entre chaque ligne et la suivante et identification des défauts par leur forme et leur niveau de teinte ou niveau de gris,
- et des moyens pour mémoriser l'ensemble des défauts au fur et à mesure de l'exploration de la pastille et classifier la pastille en fonction de critères prédéterminés.

6. Dispositif selon la revendication 5, caractérisé en ce que le capteur (50) appartient à une caméra à barrette de détecteurs CCD et en ce que la source de lumière (42) comporte au moins une diode laser.

7. Dispositif selon la revendication 5 ou 6, caractérisé en ce que le dispositif est prévu pour recevoir simultanément nxm pastilles, n et m étant des nombres entiers supérieurs à 1, et les entraîner en rotation simultanément et en synchronisme et comprend n capteurs ayant chacun mxp détecteurs, ledit ensemble de pré-traitement effectuant la comparaison avec les seuils de normalité pour les signaux fournis par mxp détecteurs et les répartissant entre n x m circuits de traitement.

8. Dispositif selon l'une quelconque des revendications 5 à 7, caractérisé en ce que la source lumineuse appartient à un ensemble d'éclairage muni de moyens mécaniques (T2,R2,T3) de mise au point de l'éclairage sur une première ligne d'un gabarit.

9. Dispositif selon l'une quelconque des revendications 5 à 8, caractérisé en ce que le capteur (50) est muni de moyens (T1,R1,H4) permettant de régler sa mise au point en correspondance avec l'éclairage sur une seconde ligne d'un gabarit.

10. Dispositif selon la revendication 8 ou 9, caractérisé en ce que le capteur (50) et la source lumineuse (42) appartiennent à un bloc de contrôle optique (24) muni de moyens mécaniques (H1, H2,H3) de réglage par rapport aux moyens pour recevoir et faire tourner la pastille.
